# EUROPÄISCHE PATENTSCHRIFT

(11) **EP 1 798 064 B1**
(45) Veröffentlichungstag und Bekanntmachung des Hinweises auf die Patenterteilung: **02.05.2018**
(21) Anmeldenummer: 06123131.2
(22) Anmeldetag: 30.10.2006
(51) Int. Cl.: B60C 11/12, B60C 11/11

(54) **Fahrzeugluftreifen**
Pneumatic tire
Pneumatique

(30) Priorität: 15.12.2005 DE 102005059844
(43) Veröffentlichungstag der Anmeldung: 20.06.2007
(73) Patentinhaber: Continental Reifen Deutschland GmbH, 30165 Hannover (DE)
(72) Erfinder: Rodewald, Helmut, 31249, Rötzum (DE)
(74) Vertreter: Finger, Karsten

(56) Entgegenhaltungen:
- EP-A- 1 566 292
- DE-A1- 19 900 266

## Beschreibung

Die Erfindung betrifft einen Fahrzeugreifen - insbesondere einen Fahrzeugluftreifen - mit drehrichtungsgebundenem Laufflächenprofil mit in den beiden Reifenschultem jeweils in Umfangsrichtung ausgerichteten und über den gesamten Umfang des Fahrzeugluftreifens ersteckten, aus in Umfangsrichtung hintereinander über den Umfang verteilt und jeweils durch Querrillen voneinander getrennt angeordneten Profilblockelementen ausgebildeten Schulterprofilblockreihen, mit wenigstens einer axial zwischen den Schulterprofilblockreihen angeordneten in Umfangsrichtung ausgerichteten und über den gesamten Umfang des Fahrzeugluftreifens ersteckten, aus in Umfangsrichtung hintereinander über den Umfang verteilt angeordneten und jeweils durch Querrillen voneinander getrennt ausgebildeten Profilblockelementen ausgebildeten weiteren Profilblockreihe, wobei sowohl in den Profilblockelementen der beiden Schulterprofilblockreihen als auch in den Profilblockelementen der weiteren Profilblockreihe Feineinschnitte ausgebildet sind.

Derartige Profile werden häufig mit einem höheren Profilpositivanteil im Schulterbereich als im Kronenbereich des Laufflächenprofils ausgebildet. Bei schmalen Feineinschnitten im Profil werden beim Befahren von Matsch und Schnee die Feineinschnitte im mit hohem Profilpositivanteil versehenen Schulterbereich schnell verstopft. Eine Selbstreinigung findet nur begrenzt statt. Trotz grundsätzlich guter Traktion durch die Feineinschnitte kann die Wirkung deren Feineinschnitte hierdurch gerade im wichtigen Schulterbereich reduziert werden. Bei breiten Feineinschnitten findet in dem für die Selbstreinigung weniger bedeutenden Kronenbereich des Profils eine schnelle Selbstreinigung statt, wobei der freigegebene Matsch bzw. Schnee schwer aus dem Profilbereich abgeleitet werden kann, wodurch durch schlagartiges Freigeben im Kronenbereich ebenfalls die Traktion beeinträchtigt werden kann.

**Aus der** DE 199 00 266 A1 **ist ein** gattungsbildender **Fahrzeugluftreifen** bekannt. Der Erfindung liegt daher die Aufgabe zugrunde einen Fahrzeugreifen - insbesondere einen Fahrzeugluftreifen - mit drehrichtungsgebundenem Laufflächenprofil mit in den beiden Reifenschultem jeweils in Umfangsrichtung ausgerichteten und über den gesamten Umfang des Fahrzeugluftreifens ersteckten, aus in Umfangsrichtung hintereinander über den Umfang verteilt und jeweils durch Querrillen voneinander getrennt angeordneten Profilblockelementen ausgebildeten Schulterprofilblockreihen, mit wenigstens einer axial zwischen den Schulterprofilblockreihen angeordneten in Umfangsrichtung ausgerichteten und über den gesamten Umfang des Fahrzeugluftreifens ersteckten, aus in Umfangsrichtung hintereinander über den Umfang verteilt angeordneten und jeweils durch Querrillen voneinander getrennt ausgebildeten Profilblockelementen ausgebildeten weiteren Profilblockreihe, wobei sowohl in den Profilblockelementen der beiden Schulterprofilblockreihen als auch in den Profilblockelementen der weiteren Profilblockreihe Feineinschnitte ausgebildet sind, zu schaffen, bei dem eine verbesserte Selbstreinigung der kritischen Profilbereiche mit verbesserter Traktion ermöglicht wird.

Die Aufgabe wird erfindungsgemäß durch die Ausbildung eines Fahrzeugreifens gemäß den Merkmalen von Anspruch 1 gelöst. Hierdurch wird gerade im kritischen Schulterbereich eine schnelle Selbstreinigung ermöglicht, wobei aus diesem Bereich das freigegebene Material einfach abgeführt wird. In dem hinsichtlich der Abführung besonders empfindlichen Mittenbereich, in dem die Selbstreinigung weniger bedeutsam ist, wird die schnelle Selbstreinigung erschwert, wodurch schnelle Materialfreibagen, die die Traktion erschweren könnten, reduziert werden können. **Durch die Ausbildung der Haupterstreckungsrichtung der Feineinschnitte der weiteren Profilblockreihe können außerdem die Bremseigenschaften und Traktionseigenschaften in Fahrtrichtung verbessert werden.**

Besonders vorteilhaft ist die Ausbildung eines Fahrzeugluftreifens gemäß den Merkmalen von Anspruch 2, wobei die größte Richtungskomponente der Haupterstreckungsrichtung der Feineinschnitte der Profilblockelemente der Schulterprofilblockreihen die axiale Richtung des Fahrzeugluftreifens ist. Hierdurch können die Bremseigenschaften und Traktionseigenschaften in Fahrtrichtung verbessert werden.

Besonders vorteilhaft ist die Ausbildung eines Fahrzeugluftreifens gemäß den Merkmalen von Anspruch 3, wobei die Feineinschnitte der Profilblockelemente der Schulterprofilblockreihen sich über die gesamte Erstreckung des jeweiligen Profilblockelements in Richtung der Haupterstreckungsrichtung des Feineinschnitts erstrecken. Dies erleichtert die Verformung in den Profilblockelementen zur Verbesserung des Grips.

Besonders vorteilhaft ist die Ausbildung eines Fahrzeugluftreifens gemäß den Merkmalen von Anspruch **4,** wobei die Feineinschnitte der Profilblockelemente der weiteren Profilblockreihe sich über die gesamte Erstreckung des jeweiligen Profilblockelements in Richtung der Haupterstreckungsrichtung des Feineinschnitts erstrecken. Dies erleichtert die Verformung in den Profilblockelementen zur Verbesserung des Grips.

Besonders vorteilhaft ist die Ausbildung eines Fahrzeugluftreifens gemäß den Merkmalen von Anspruch **5,** wobei für die Breite B₁ der Feineinschnitte der Profilblockelemente der Schulterprofilblockreihe gilt: 0,4 mm ≤ B₁ ≤ 1,0mm.

Besonders vorteilhaft ist die Ausbildung eines Fahrzeugluftreifens gemäß den Merkmalen von Anspruch **6,** wobei für die Breite B₂ der Feineinschnitte der Profilblockelemente der weiteren Profilblockreihe gilt: 0,3mm ≤ B₂ ≤ 0,9mm.

Besonders vorteilhaft ist die Ausbildung eines Fahrzeugluftreifens gemäß den Merkmalen von Anspruch **7,** wobei für die Breite B₁ der Feineinschnitte der Profilblockelemente der Schulterprofilblockreihe und für die Breite B₂ der Feineinschnitte der Profilblockelemente der weiteren Profilblockreihe gilt: B1 ≥ (B2 + 0,1 mm).

Besonders vorteilhaft ist die Ausbildung eines Fahrzeugluftreifens gemäß den Merkmalen von Anspruch **8,** wobei die jeweils quer zur Haupterstreckungsrichtung der Querrillen gemessene Breite derart ausgebildet ist, dass die Breite B₃ der die Profilblockelemente der Schulterprofilblockreihen in Umfangsrichtung voneinander trennenden Querrillen kleiner als die Breite B₄ der Profilblockelemente der weiteren Profilblockreihe in Umfangsrichtung voneinander trennenden Querrillen ist Dies dient einem besonders guten Fahrverhalten auf trockener Straße.

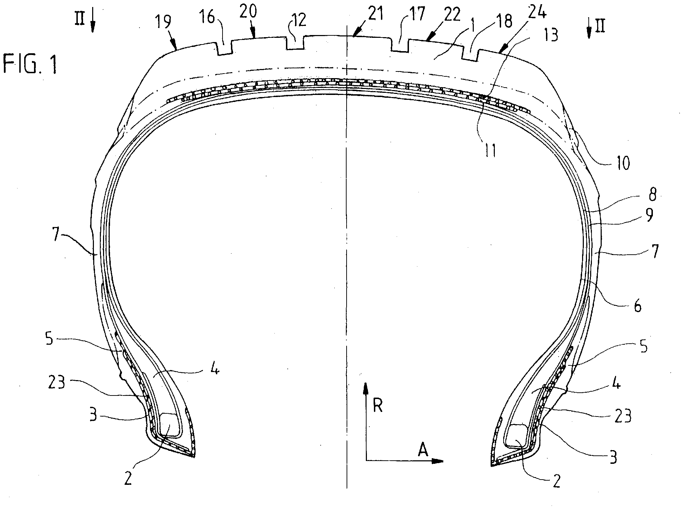

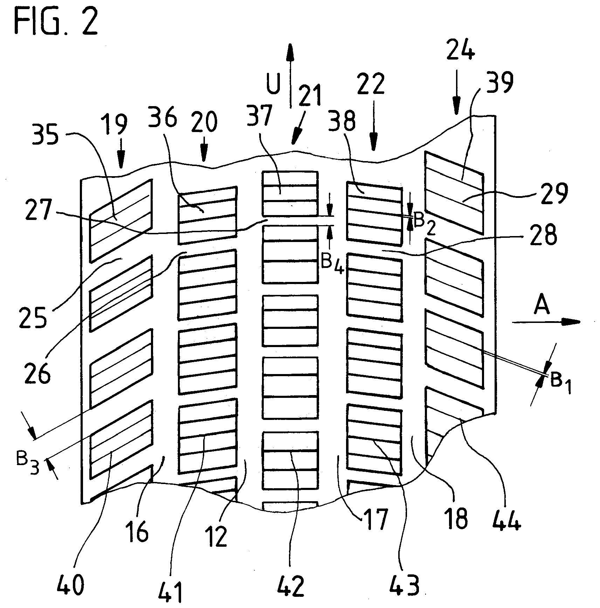

Die Erfindung wird im Folgenden an Hand der in den Figuren 1 und 2 schematisch dargestellten Ausführungsbeispiele näher erläutert. Dabei zeigen
- Fig. 1: Draufsicht auf ein Laufflächenprofil
- Fig. 2: Laufflächenprofil von Fig. 1 in Schnittdarstellung gemäß Schnitt I-I.

In Fig. 1 ist der Aufbau eines Fahrzeugluftreifens beispielhaft dargestellt, bei dem um einen Kern 2 mit Kernprofil 4 eine erste Karkassenlage 8 bekannter Art außerhalb einer luftundurchlässigen Innenschicht 6 über den rechten Schulterbereich und die Zenitebene zu dem linken Schulterbereich und den linken Kern 2 mit Kernprofil 4 reicht, um den sie in herkömmlicher Weise gelegt ist. Über der ersten Karkassenlage 8 ist in herkömmlicher Weise eine zweite Karkassenlage 9 bekannter Art gelegt, die sich ebenfalls von der in Fig.1 rechts dargestellten Seite des Reifens bis zur links dargestellten Seite erstreckt. In herkömmlicher Weise ist im Kernbereich jeweils über einen Wulststreifen 23 und den Wulstverstärker 3 ein Hornprofil 5 und von diesem ausgehend bis in den Schulterbereich reichend ein Seitenwandstreifen 7 aufgelegt. Über den Umfang des Reifens reichen außerhalb der Karkassenlagen 7 und 8 radialer Bauart angeordnet mehrere Stahlgürtellagen 11 und 13 bekannter Art mit in Kautschuk eingebetteten Stahlkorden. Im Schulterstreifen sind in bekannter Weise zusätzlich Schulterstreifen 10 aufgelegt. Den Abschluss des Reifenaufbaus bildet in bekannter Weise ein profilierter Laufstreifen 1.

In den Figuren ist die axiale Richtung A des Fahrzeugluftreifens mit Pfeildarstellung eingetragen. Die radiale Richtung R des Fahrzeugluftreifens ist ebenfalls mit Pfeildarstellung angegeben, wobei die Pfeilrichtung von radial innen nach radial außen weist. Ebenso ist die Umfangsrichtung U des Fahrzeugluftreifens mit Pfeildarstellung angegeben, wobei die Pfeilrichtung die Drehrichtung des Fahrzeugluftreifens im auf ein Fahrzeug montierten Betriebszustand bei Vorwärtsfahrt angibt.

In den Figuren 1 und 2 ist zu erkennen, dass der Laufstreifen 1 mit einem richtungsgebundenen, fahrzeugseitenungebundenen Reifenprofil ausgebildet ist, welches in axialer Richtung A ausgehend von der linken Reifenschulter bis zur rechten Reifenschulter hintereinander angeordnet mit einer in Umfangsrichtung U ausgerichteten Profilblockreihe 19, die in den linken Schulterbereich reicht, mit einer in Umfangsrichtung U ausgerichteten Profilblockreihe 20, mit einer zentralen in Umfangsrichtung U ausgerichteten Profilblockreihe 21, mit einer in Umfangsrichtung U ausgerichteten Profilblockreihe 22 und mit einer in Umfangsrichtung U ausgerichteten Profilblockreihe 24, die in den rechten Schulterbereich reicht, ausgebildet ist. Die Profilblockreihe 19 ist aus einer Vielzahl von in Umfangsrichtung U des Reifens hintereinander angeordneten Profilblockelementen 35 bekannter Art ausgebildet, die jeweils durch eine Querrille 25 bekannter Art voneinander getrennt sind. Die Profilblockreihe 20 ist aus einer Vielzahl von in Umfangsrichtung U des Reifens hintereinander angeordneten Profilblockelementen 36 bekannter Art ausgebildet, die jeweils voneinander durch eine Querrille 26 bekannter Art getrennt sind. Die Profilblockreihe 21 ist aus einer Vielzahl von in Umfangsrichtung U hintereinander angeordneten Profilblockelementen 37 bekannter Art ausgebildet, die jeweils voneinander durch eine Querrille 27 bekannter Art getrennt sind. Die Profilblockreihe 22 ist von einer Vielzahl von in Umfangsrichtung U hintereinander angeordneten Profilblockelementen 38 bekannter Art ausgebildet, die jeweils voneinander durch eine Querrille 28 bekannter Art getrennt sind. Die Profilblockreihe 24 ist aus einer Vielzahl von in Umfangsrichtung U hintereinander angeordneten Profilblockelementen 39 bekannter Art ausgebildet, die jeweils durch eine Querrille 29 bekannter Art voneinander getrennt sind. Die Profilblockreihen 19 und 20 sind in axialer Richtung A des Fahrzeugluftreifens durch eine des Reifens erstreckt, voneinander getrennt. Die Profilblockreihen 20 und 21 sind in in Umfangsrichtung U verlaufende Umfangsrille 16, die sich über den gesamten Umfang axialer Richtung A des Fahrzeugluftreifens durch eine in Umfangsrichtung U des Reifens verlaufende und sich über den gesamten Umfang erstreckende Umfangsrille 12 bekannter Art voneinander getrennt. Die Profilblockreihen 21 und 22 sind in axialer Richtung A des Reifens durch eine in Umfangsrichtung U des Reifens verlaufende und über den gesamten Umfang des Reifens erstreckte Umfangsrille 17 bekannter Art voneinander getrennt. Die Profilblockreihe 22 und die Profilblockreihe 24 sind in axialer Richtung A durch eine in Umfangsrichtung U des Reifens verlaufende und über den gesamten Umfang des Reifens erstreckte Umfangsrille 18 bekannter Art von einander getrennt.

In den Profilblockelementen 35 der Schulterprofilblockreihe 19 sind parallel zu den Querrillen 25 Feineinschnitte **40** ausgebildet, die sich über die gesamte axiale Erstreckung des Profilblockelements 35 erstrecken. In den Profilblockelementen 36 der Profilblockreihe 20 sind parallel zu den Querrillen 26 verlaufend Feineinschnitte 41 ausgebildet, die sich über die gesamte axiale Erstreckung der Profilblockelemente 36 erstrecken. In den Profilblockelementen 37 der Profilblockreihe 21 sind parallel zu den Querrillen 27 Feineinschnitte 42 ausgebildet, die sich über die gesamte axiale Erstreckung der Profilblockelemente 37 erstrecken. In den Profilblockelementen 38 der Profilblockreihe 22 sind in den Profilblockelementen 38 parallel zu den Querrillen 28 Feineinschnitte 43 ausgebildet, die sich über die gesamte axiale Erstreckung der Profilblockelemente 38 erstrecken. In den Profilblockelementen 39 der Schulterprofilblockreihe 24 sind parallel zu den Querrillen 29 Feineinschnitte 44 ausgebildet, die sich über die gesamte axiale Erstreckung der Profilblockelemente 39 jeweils erstrecken.

Die Feineinschnitte 40 der Profilblockelemente 35 der Profilblockreihe 19 sowie die Feineinschnitte 44 der Profilblockelemente 39 der Schulterprofilblockreihe 24 sind mit einer jeweils quer zur Haupterstreckungsrichtung des jeweiligen Feineinschnitts 40 bzw. 35 gemessenen Breite B1 ausgebildet. Die Feineinschnitte 41 der Profilblockelemente 36 der Profilblockreihe 20 sowie die Feineinschnitte 42 der Profilblockelemente 37 der Profilblockreihe 21 sowie die Feineinschnitte 43 der Profilblockelemente 38 der Profilblockreihe 22 sind jeweils mit einer quer zur Haupterstreckungsrichtung des jeweiligen Feineinschnitts 41 bzw. 42 bzw. 43 gemessenen Breite B2 ausgebildet. Dabei sind die Breiten B1 und B2 so bemessen, dass die Breite B1 der Feineinschnitte 40 bzw. 44 größer ist als die Breite B2 der Feineinschnitte 41, 42, 43. Die Breite B1 und die Breite B2 sind dabei so gewählt, dass B1 ≥ (B2 + 0,1mm). Die Breite B1 ist dabei so bemessen, dass für die Breite B1 gilt, 0,4mm ≤ B1 ≤ 1,0mm. Die Breite B2 ist dabei so bemessen, dass für B2 gilt 0,3 mm ≤ B2 ≤ 0,9mm. Beispielsweise ist die Breite B1 0,8mm und die Breite B2 0,4mm groß gewählt.

Die Querrillen 25 bzw. 29 der Schulterprofilblockreihe 19 bzw. 24 sind jeweils mit einer quer zur Haupterstreckungsrichtung der jeweiligen Querrille gemessenen Breite B3 ausgebildet. Die Querrillen 26, 27, 28 sind mit einer jeweils quer zur Haupterstreckungsrichtung der jeweiligen Querrille gemessenen Breite B4 ausgebildet. Dabei gilt B3 < B4.

Auch wenn in Fig. 2 die Erfindung an Hand eines Laufflächenprofils mit fahrzeugseitenungebundenen symmetrischem Reifenprofil zeigt, ist in einer anderen nicht dargestellten Ausführung das Laufflächenprofil fahrzeugseitengebunden asymmetrisch ausgebildet.

### Bezugszeichenliste

### (Teil der Beschreibung)

- 1: Laufstreifen
- 2: Kern
- 3: Wulstverstärker
- 4: Kernprofil
- 5: Hornprofil
- 6: Innenschicht
- 7: Seitenstreifen
- 8: Karkassenlage
- 9: Karkassenlage
- 10: Schulterstreifen
- 11: Gürtellage
- 12: Umfangsrille
- 13: Gürtellage

- 16: Umfangsrille
- 17: Umfangsrille
- 18: Umfangsrille
- 19: Profilblockreihe
- 20: Profilblockreihe
- 21: Profilblockreihe
- 22: Profilblockreihe
- 23: Wulststreifen
- 24: Profilblo ckreihe

- 25: Querrille
- 26: Querrille
- 27: Querrille
- 28: Querrille
- 29: Querrille

- 35: Profilblockelement
- 36: Profilblockelement
- 37: Profilblockelement
- 38: Profilblockelement
- 39: Profilblockelement
- 40: Feineinschnitt
- 41: Feineinschnitt
- 42: Feineinschnitt
- 43: Feineinschnitt
- 44: Feineinschnitt

## Patentansprüche

1. Fahrzeugreifen - insbesondere Fahrzeugluftreifen - mit drehrichtungsgebundenem Laufflächenprofil
- mit in den beiden Reifenschultem jeweils in Umfangsrichtung ausgerichteten und über den gesamten Umfang des Fahrzeugluftreifens erstreckten, aus in Umfangsrichtung hintereinander über den Umfang verteilt und jeweils durch Querrillen (25,29) voneinander getrennt angeordneten Profilblockelementen (35,39) ausgebildeten Schulterprofilblockreihen (19,24),
- mit wenigstens einer axial zwischen den Schulterprofilblockreihen (19,24) angeordneten in Umfangsrichtung ausgerichteten und über den gesamten Umfang des Fahrzeugluftreifens ersteckten, aus in Umfangsrichtung hintereinander über den Umfang verteilt angeordneten und jeweils durch Querrillen (26,27,28) voneinander getrennt ausgebildeten Profilblockelementen (36,37,38) ausgebildeten weiteren Profilblockreihe (20,21,22),
- wobei sowohl in den Profilblockelementen (35,39) der beiden Schulterprofilblockreihen (19,24) als auch in den Profilblockelementen (36,37,38) der weiteren Profilblockreihe (20,21,22) Feineinschnitte (40,41,42,43,44) ausgebildet sind,
- und wobei die jeweils quer zur Haupterstreckungsrichtung der Feineinschnitte (40,41,42,43,44) gemessene Breite derart ausgebildet ist, dass die Breite der Feineinschnitte (40,44) der Profilblockelemente (35,39) der Schulterprofilblockreihe (19,24) größer als die Breite der Feineinschnitte (41,42,43) der weiteren Profilblockreihe (20,21,22) ist, **dadurch gekennzeichnet**
- **dass** die größte Richtungskomponente der Haupterstreckungsrichtung der Feineinschnitte (41,42,43) der Profilblockelemente (36,37,38) der weiteren Profilblockreihe (20,21,22) die axiale Richtung des Fahrzeugluftreifens ist.

2. Fahrzeugreifen gemäß den Merkmalen von Anspruch 1,
wobei die größte Richtungskomponente der Haupterstreckungsrichtung der Feineinschnitte (40,44) der Profilblockelemente (35,39) der Schulterprofilblockreihen (19,24) die axiale Richtung des Fahrzeugluftreifens ist.

3. Fahrzeugreifen gemäß den Merkmalen von einem oder mehreren der vorangegangenen Ansprüche,
wobei die Feineinschnitte (40,44) der Profilblockelemente (35,39) der Schulterprofilblockreihen (19,24) sich über die gesamte Erstreckung des jeweiligen Profilblockelements (35,39) in Richtung der Haupterstreckungsrichtung des Feineinschnitts (40,44) erstrecken.

4. Fahrzeugreifen gemäß den Merkmalen von einem oder mehreren der vorangegangenen Ansprüche,
wobei die Feineinschnitte (41,42,43) der Profilblockelemente (36,37,38) der weiteren Profilblockreihe (20,21,22) sich über die gesamte Erstreckung des jeweiligen Profilblockelements (36,37,38) in Richtung der Haupterstreckungsrichtung des Feineinschnitts (41,42,43) erstrecken.

5. Fahrzeugreifen gemäß den Merkmalen von einem oder mehreren der vorangegangenen Ansprüche,
wobei für die Breite B₁ der Feineinschnitte (40,44) der Profilblockelemente (35,39) der Schulterprofilblockreihe (19,24) gilt: 0,5mm ≤ B₁ ≤ 1,0mm.

6. Fahrzeugreifen gemäß den Merkmalen von einem oder mehreren der vorangegangenen Ansprüche,
wobei für die Breite B₂ der Feineinschnitte (41,42,43) der Profilblockelemente (36,37,38) der weiteren Profilblockreihe (20,21,22) gilt: 0,2mm ≤ B₂ ≤ 0,6mm.

7. Fahrzeugreifen gemäß den Merkmalen von einem oder mehreren der vorangegangenen Ansprüche,
wobei für die Breite B₁ der Feineinschnitte (40,44) der Profilblockelemente (35,39) der Schulterprofilblockreihe (19,24) und für die Breite B₂ der Feineinschnitte (41,42,43) der Profilblockelemente (36,37,38) der weiteren Profilblockreihe (20,21,22) gilt: B1 ≥ (B2 + 0,1mm).

8. Fahrzeugreifen gemäß den Merkmalen von einem oder mehreren der vorangegangenen Ansprüche,
wobei die jeweils quer zur Haupterstreckungsrichtung der Querrillen (25,26,27,28,29) gemessene Breite derart ausgebildet ist, dass die Breite B₃ der die Profilblockelemente (35,39) der Schulterprofilblockreihen (19,24) in Umfangsrichtung voneinander trennenden Querrillen (25,29) kleiner als die Breite B₄ der Profilblockelemente (36,37,38) der weiteren Profilblockreihe (20,21,22) in Umfangsrichtung voneinander trennenden Querrillen (26,27,28) ist.

## Claims

1. Vehicle tyre - in particular a pneumatic vehicle tyre - with a directional tread profile
- with, in the two shoulders of the tyre, shoulder profile block rows (19, 24), which are respectively aligned in the circumferential direction and made to extend over the entire circumference of the pneumatic vehicle tyre, and are formed by profile block elements (35, 39) arranged distributed one behind the other in the circumferential direction of the circumference and respectively separated from one another by transverse grooves (25, 29),
- with at least one further profile block row (20, 21, 22), which is arranged axially between the shoulder profile block rows (19, 24), aligned in the circumferential direction and made to extend over the entire circumference of the pneumatic vehicle tyre, and is formed by profile block elements (36, 37, 38) arranged distributed one behind the other in the circumferential direction over the circumference and respectively formed separated from one another by transverse grooves (26, 27, 28),
- wherein sipes (40, 41, 42, 43, 44) are formed both in the profile block elements (35, 39) of the two shoulder profile block rows (29, 24) and in the profile block elements (36, 37, 38) of the further profile block row (20, 21, 22),
- and wherein the width respectively measured transversely to the main direction of extent of the sipes (40, 41, 42, 43, 44) is formed in such a way that the width of the sipes (40, 44) of the profile block elements (35, 39) of the shoulder profile block row (19, 24) is greater than the width of the sipes (41, 42, 43) of the further profile block row (20, 21, 22), **characterized**
- **in that** the greatest directional component of the main direction of extent of the sipes (41, 42, 43) of the profile block elements (36, 37, 38) of the further profile block row (20, 21, 22) is the axial direction of the pneumatic vehicle tyre.

2. Vehicle tyre according to the features of Claim 1,
wherein the greatest directional component of the main direction of extent of the sipes (40, 44) of the profile block elements (35, 39) of the shoulder profile block rows (19, 24) is the axial direction of the pneumatic vehicle tyre.

3. Vehicle tyre according to the features of one or more of the preceding claims,
wherein the sipes (40, 44) of the profile block elements (35, 39) of the shoulder profile block rows (19, 24) extend over the entire extent of the respective profile block element (35, 39) in the direction of the main direction of extent of the sipe (40, 44).

4. Vehicle tyre according to the features of one or more of the preceding claims,
wherein the sipes (41, 42, 43) of the profile block elements (36, 37, 38) of the further profile block row (20, 21, 22) extend over the entire extent of the respective profile block element (36, 37, 38) in the direction of the main direction of extent of the sipe (41, 42, 43).

5. Vehicle tyre according to the features of one or more of the preceding claims,
wherein the following applies for the width B₁ of the sipes (40, 44) of the profile block elements (35, 39) of the shoulder profile block row (19, 24) : 0.5 mm ≤ B₁ ≤ 1.0 mm.

6. Vehicle tyre according to the features of one or more of the preceding claims,
wherein the following applies for the width B₂ of the sipes (41, 42, 43) of the profile block elements (36, 37, 38) of the further profile block row (20, 21, 22): 0.2 mm ≤ B₂ ≤ 0.6 mm.

7. Vehicle tyre according to the features of one or more of the preceding claims,
wherein the following applies for the width B₁ of the sipes (40, 44) of the profile block elements (35, 39) of the shoulder profile block row (19, 24) and for the width B₂ of the sipes (41, 42, 43) of the profile block elements (36, 37, 38) of the further profile block row (20, 21, 22) : B1 ≥ (B2 + 0.1 mm).

8. Vehicle tyre according to the features of one or more of the preceding claims,
wherein the width respectively measured transversely to the main direction of extent of the transverse grooves (25, 26, 27, 28, 29) is formed in such a way that the width B₃ of the transverse grooves (25, 29) separating the profile block elements (35, 39) of the shoulder profile block rows (19, 24) from one another in the circumferential direction is less than the width B₄ of the transverse grooves (26, 27, 28) separating profile block elements (36, 37, 38) of the further profile block row (20, 21, 22) from one another in the circumferential direction.

## Revendications

1. Pneu de véhicule - en particulier pneumatique de véhicule - comprenant un profil de surface de roulement associé au sens de rotation
- avec des rangées de blocs profilés d'épaulement (19, 24) à chaque fois orientées dans la direction périphérique dans les deux épaulements du pneu et s'étendant sur toute la périphérie du pneumatique de véhicule, constituées d'éléments de blocs profilés (35, 39) répartis sur toute la périphérie les uns derrière les autres dans la direction périphérique et disposés de manière séparée les uns des autres par des rainures transversales (25, 29),
- avec au moins une rangée de blocs profilés supplémentaire (20, 21, 22) disposée axialement entre les rangées de blocs profilés d'épaulement (19, 24), orientée dans la direction périphérique, et s'étendant sur toute la périphérie du pneumatique de véhicule, réalisée à partir d'éléments de blocs profilés (36, 37, 38) disposés de manière répartie sur la périphérie les uns derrière les autres dans la direction périphérique et séparés à chaque fois les uns des autres par des rainures transversales (26, 27, 28),
- de fines entailles (40, 41, 42, 43, 44) étant réalisées à la fois dans les éléments de blocs profilés (35, 39) des deux rangées de blocs profilés d'épaulement (19, 24) ainsi que dans les éléments de blocs profilés (36, 37, 38) de la rangée de blocs profilés supplémentaire (20, 21, 22),
- et la largeur mesurée à chaque fois transversalement à la direction d'étendue principale des fines entailles (40, 41, 42, 43, 44) étant réalisée de telle sorte que la largeur des fines entailles (40, 44) des éléments de blocs profilés (35, 39) de la rangée de blocs profilés d'épaulement (19, 24) soit supérieure à la largeur des fines entailles (41, 42, 43) de la rangée de blocs profilés supplémentaire (20, 21, 22), **caractérisé en ce que**
- la plus grande composante directionnelle de la direction d'étendue principale des fines entailles (41, 42, 43) des éléments de blocs profilés (36, 37, 38) de la rangée de blocs profilés supplémentaire (20, 21, 22) est la direction axiale du pneumatique de véhicule.

2. Pneu de véhicule selon les caractéristiques de la revendication 1,
dans lequel la plus grande composante directionnelle de la direction d'étendue principale des fines entailles (40, 44) des éléments de blocs profilés (35, 39) des rangées de blocs profilés d'épaulement (19, 24) est la direction axiale du pneumatique de véhicule.

3. Pneu de véhicule selon les caractéristiques d'une ou plusieurs des revendications précédentes,
dans lequel les fines entailles (40, 44) des éléments de blocs profilés (35, 39) des rangées de blocs profilés d'épaulement (19, 24) s'étendent sur toute l'étendue de l'élément de bloc profilé respectif (35, 39) dans la direction de la direction d'étendue principale de la fine entaille (40, 44).

4. Pneu de véhicule selon les caractéristiques d'une ou plusieurs des revendications précédentes,
dans lequel les fines entailles (41, 42, 43) des éléments de blocs profilés (36, 37, 38) de la rangée de blocs profilés supplémentaire (20, 21, 22) s'étendent sur toute l'étendue de l'élément de bloc profilé respectif (36, 37, 38) dans la direction de la direction d'étendue principale de la fine entaille (41, 42, 43).

5. Pneu de véhicule selon les caractéristiques d'une ou plusieurs des revendications précédentes,
dans lequel, pour la largeur B₁ des fines entailles (40, 44) des éléments de blocs profilés (35, 39) de la rangée de blocs profilés d'épaulement (19, 24), on a : 0,5 mm ≤ B₁ ≤ 1,0 mm.

6. Pneu de véhicule selon les caractéristiques d'une ou plusieurs des revendications précédentes,
dans lequel, pour la largeur B₂ des fines entailles (41, 42, 43) des éléments de blocs profilés (36, 37, 38) de la rangée de blocs profilés supplémentaire (20, 21, 22), on a : 0,2 mm ≤ B₂ ≤ 0,6 mm.

7. Pneu de véhicule selon les caractéristiques d'une ou plusieurs des revendications précédentes,
dans lequel pour la largeur B₁ des fines entailles (40, 44) des éléments de blocs profilés (35, 39) de la rangée de blocs profilés d'épaulement (19, 24) et pour la largeur B₂ des fines entailles (41, 42, 43) des éléments de blocs profilés (36, 37, 38) de la rangée de blocs profilés supplémentaire (20, 21, 22), on a : B1 ≥ (B2 + 0,1 mm).

8. Pneu de véhicule selon les caractéristiques d'une ou plusieurs des revendications précédentes,
dans lequel la largeur mesurée à chaque fois transversalement à la direction d'étendue principale des rainures transversales (25, 26, 27, 28, 29) est réalisée de telle sorte que la largeur B₃ des rainures transversales (25, 29) séparant les uns des autres dans la direction périphérique les éléments de blocs profilés (35, 39) des rangées de blocs profilés d'épaulement (19, 24) soit inférieure à la largeur B₄ des rainures transversales (26, 27, 28) séparant les uns des autres dans la direction périphérique des éléments de blocs profilés (36, 37, 38) de la rangée de blocs profilés supplémentaire (20, 21, 22).
